# EUROPÄISCHE PATENTSCHRIFT

(11) **EP 2 684 850 B1**
(45) Veröffentlichungstag und Bekanntmachung des Hinweises auf die Patenterteilung: **18.10.2017**
(21) Anmeldenummer: 13002702.2
(22) Anmeldetag: 24.05.2013
(51) Int. Cl.: C03B 9/193, C03B 9/36, C03B 9/38, C03B 9/40, C03B 9/453

(54) **Verfahren und Vorrichtung zur Blas- und Kühlluftregelung einer I.S. Glasformmaschine**
Method and device for the blowing and cooling air supply of an I.S glass forming machine
Procédé et dispositif de régulation de l'air soufflé et de l'air de refroidissement d'une machine de moulage de verre I.S.

(30) Priorität: 14.07.2012 DE 102012013840
(43) Veröffentlichungstag der Anmeldung: 15.01.2014
(73) Patentinhaber: Heye International GmbH, 31683 Obernkirchen (DE)
(72) Erfinder: Borcherding, Karl-Friedrich, 31717 Nordsehl (DE); Felgenhauer, Benedikt, Dr., 32049 Herford (DE); Isensee, Dennis, 31698 Lindhorst (DE); Möller, Eckhard, 31683 Obernkirchen (DE)
(74) Vertreter: Sobisch, Peter

(56) Entgegenhaltungen:
- EP-B1- 1 318 111
- US-A- 3 854 921

## Beschreibung

Die Erfindung bezieht sich auf ein Verfahren zur Blasluftregelung entsprechend dem Oberbegriff des Anspruchs 1. Sie bezieht sich ferner auf eine Vorrichtung zur Durchführung dieses Verfahrens entsprechend dem Oberbegriff des Anspruchs.

Die Regelung der Blasluft während der Herstellung von Hohlglasartikeln ist von Bedeutung für die Geschwindigkeit der Formgebung sowie Kühlung und hiermit einhergehend für die mechanische Stabilität der Artikel in den einzelnen Stufen des Herstellungsprozesses. Es geht hierbei um die Darstellung einer reproduzierbaren Artikelqualität entgegen äußeren, jedoch auch inneren, beispielsweise durch Verschleiß bedingten Störeinflüssen.

Aus der GB 2 297 548 A sind ein Verfahren und eine Vorrichtung zur Blasdruckregelung einer Glasformmaschine bekannt, bei welchen in dem, eine Fertigform oberseitig schließenden Blaskopf eine zur Zuführung von Blasluft bestimmte Leitung, eine zur Ableitung von Blasluft bestimmte Leitung und eine zur Druckmessung bestimmte Leitung einmünden. Die zur Zu- und Ableitung von Blasluft dienenden Leitungen sind mit Proportionalventilen ausgerüstet, die ebenso wie ein an dem einen Ende der zur Druckmessung dienenden Leitung angeordnetes Druckmessgerät mit einer rechnergestützten Steuerungseinrichtung in Verbindung stehen. Erreicht werden soll eine Steuerung des Druckes und der Dauer eines Blaslufteinbringens in die Fertigform mit dem Ziel, in der Fertigform eine an die Eigenschaften des schmelzflüssigen Glases angepasste Blas- und Kühlwirkung darzustellen. Berücksichtigung finden soll hierbei die temperaturbedingt geringe mechanische Stabilität der hergestellten Hohlglasartikel während und unmittelbar nach der Formgebung sowie die geringe Wärmeleitfähigkeit des Glases. Die Steuerungseinrichtung bildet einen Teil eines Regelkreises, der auf der Grundlage der Druckmessung sowie optimaler gespeicherter und im Bedarfsfall änderbarer Werte sonstiger Parameter über die Proportionalventile auf den Formgebungsprozeß in der Fertigform einwirkt.

Aus der EP 1 894 894 A1 ist eine Fertigform einer I.S.-Glasformmaschine bekannt, bei welcher der Blasdruck mit der Maßgabe geregelt wird, dass in einer ersten Phase lediglich ein relativ niedriger, zur Stabilisierung des Hohlraums des Külbels ausreichender Druck in diesem entwickelt wird, und zwar während der Zeit eines Rückerwärmens, bei welcher Randbereiche erneut erwärmt werden. Dieser Niederdruck ist derart ausgelegt, dass noch keine Formgebung stattfindet. Erst in einer zweiten, sich anschließenden Phase wird unter hohem, dass heißt zur eigentlichen Formgebung bestimmten Druck stehende Blasluft in den genannten Hohlraum eingeführt. Es geht in diesem Dokument somit lediglich um die Vermeidung von Deformationen infolge von in die Fertigform eingedrungener Kühlluft nach erfolgter Rückerwärmung.

In der EP 1 318 111 B1 ist ein Verfahren zur Steuerung des Blasluftdruckes beschrieben, bei welchem eine Dehnung des Külbels unter dem Einfluß einer Rückerwärmung bis zum Boden der Fertigform durch ein Thermoelement erfasst und anschließend nach Ablauf einer einstellbaren Verzögerung Blasluft unter einem für eine Verformung des Külbels zum fertigen Hohlglasartikel ausreichenden Druck in diesen eingeführt wird.

Bei dem aus der DE 601 10 139 T2 bekannten Verfahren wird der Druck der Blasluft, mit dem eine Vorform und eine Fertigform einer I.S.-Glasformmaschine während des Formgebungsprozesses beaufschlagt werden, nach einem gespeicherten Zeitprofil bemessen. Zu diesem Zweck sind in den Luftzuleitungen zu der Vorform und der Fertigform Proportionalventile angeordnet, über welche ein im Zeitablauf durch Stufen gekennzeichneter Druckverlauf dargestellt wird, wobei zwischen einer Blasphase und einer Abkühlphase unterschieden wird.

Schließlich ist es aus dem Dokument DE 601 08 548 T2 bekannt, die Steuerung der Blasluft sowie der Kühlluft für den Halsbereich eines Hohlglasartikels in der Fertigform einer Glasformmaschine jeweils unter Mitwirkung eines ein- und ausschaltbaren Magnetventils zu bewirken, dessen Schaltzeiten nach Maßgabe des von einer zentralen Steuerung vorgegebenen Arbeitstaktes eingerichtet sind, wobei die Schaltzustände der Ventile sowie der durch deren Schaltstellungen gegebene eingangsseitige Druck der Blas- und der Kühlluft vor dem Blaskopf erfasst, mit der vorgegebenen Maschinentaktung verglichen werden und wobei im Fall von Abweichungen ein Störsignal generiert wird.

Der vorstehend aufgelistete Stand der Technik läßt erkennen, dass das eigentliche Objekt des Formgebungsprozesses, der herzustellende Hohlglasartikel, nämlich dessen Zustand äußerstenfalls indirekt bzw. nur teilweise berücksichtigt wird. So wird die Temperatur des Artikels in seiner Gesamtheit in den einzelnen Stationen des Prozesses nicht erfasst, welche jedoch für dessen Verformungsverhalten und gleichermaßen dessen mechanische Stabilität von wesentlicher Bedeutung ist. Die zur Formgebung sowohl in der Vorform als auch in der Fertigform eingesetzte Blasluft übt stets neben einer Formgebungswirkung auch eine Kühlwirkung aus und bestimmt maßgeblich die Temperatur, unter der der Artikel steht. Diese Temperatur unterliegt jedoch zahlreichen, unter anderem auch durch die Umgebung bedingten Einflüssen. Zur Erzielung einer reproduzierbaren Produktqualität ist jedoch eine Darstellung gleichförmiger Verformungsbedingungen erforderlich, welches mit diesem Stand der Technik nur in Teilaspekten erreicht wird.

Aus dem Dokument DE 10 2004 041 282 B1 ist es bekannt, zur Qualitätsverbesserung des Hohlglasartikels sowie zur Beschleunigung der Herstellzeit einen Blaskopf einer Glasformmaschine mit einem, in den Hohlglasartikel motorisch, hier mittels einer Kolben-Zylinder-Einheit absenkbaren Blasrohr auszurüsten.

Es ist die Aufgabe der Erfindung ein Verfahren der eingangs dargelegten Art dahingehend auszugestalten, dass die Bedingungen des Verformungsprozesses, insbesondere betreffend das Verformungsverhalten des herzustellenden Hohlglasartikels weitergehender erfasst und umgesetzt werden, und zwar mit dem Ziel, diese zu vergleichmäßigen. Gelöst ist diese Aufgabe bei einem solchen Verfahren durch die Merkmale des Kennzeichnungsteils des Anspruchs 1.

Wesentlich für die Regelung der Kühlluftströme ist, dass diese nach Maßgabe von zu kühlenden Abschnitten der Glasformmaschine, die mit der Kühlluft in thermischem Kontakt stehen, erfolgt, wobei der zwischen einem Eingang und einem Ausgang des Abschnitts eintretende Wärmeverlust erfasst, mit einem Sollwert bzw. einem Toleranzfeld verglichen und als Grundlage für eine Variierung des Volumenstromes der Kühlluft genutzt wird. Abschnittsweise wird somit ein Wärmeverlust erfasst und mit Standardwerten verglichen, auf deren Grundlage im Bedarfsfall der zur Kühlung eingesetzte Volumenstrom verändert wird, und zwar mit dem Ziel, in dem jeweiligen Abschnitt einen gewünschten Wärmeverlust darzustellen. Dieses Prinzip wird einheitlich für alle zu kühlenden Abschnitte benutzt und bildet eine Möglichkeit, die Temperatur der herzustellenden Hohlglasartikel beginnend mit dem in der Vorform hergestellten Külbel bis zu dem auf einer Absetzplatte abzustellenden fertigen Hohlglasartikel entgegen äußeren Einflüssen stabil zu halten, so dass sich hinsichtlich der Temperatur gleichförmige reproduzierbare Verhältnisse einstellen, welche sowohl das Verformungsverhalten als auch die mechanische Stabilität des Artikels betreffen, der von der Absetzplatte mittels eines Förderbandes in einen Kühlofen überführt wird.

Dieses Verfahren kann auch zur Erkennung von Fehlerquellen in der Form beispielsweise von defekten Schläuchen, Ventilen usw. sowie von Unterschieden der einzelnen Stationen einer I.S.-Glasformmaschine, zum Ausgleich von Temperaturunterschieden sowie zur Signalisierung des Verlassens von Toleranzfenstern benutzt werden.

Wesentlich für die Regelung der Blasluftströme sowohl in der Vorform als auch der Fertigform ist es, dass entsprechend den Merkmalen des Anspruchs 2 die zur Formgebung aufgewandte Blas- und/oder Saugarbeit anhand eines Volumenstromes der Blasluft sowie des Druckes ermittelt und nach Maßgabe von Sollwerten zur Ermittlung des Endes des Formgebungsvorgangs benutzt wird. Zur Variierung der aufgewandten Blas- und/oder Saugarbeit können der Druck, die Zeit und/oder der Volumenstrom variiert werden, um eine definierte Verformungsgeschwindigkeit in der Vorform bzw. der Fertigform zu erreichen. Wesentlich ist ferner, dass im Anschluss an diese erste, hauptsächlich der Formgebung dienende Phase sich eine zweite, zur Kühlung bestimmte Phase anschließt, die wiederum auf einer Erfassung des Wärmeverlustes basiert und diesen im Bedarfsfall nach Maßgabe von Sollwerten über eine Variierung des Volumenstromes der Luft anpasst.

Es sei an dieser Stelle bereits angemerkt, dass es wesentlich auf die gesamte Energiebilanz ankommt, von der die Blas- oder Saugarbeit lediglich einen Teil ausmacht und lediglich in der genannten ersten Phase eine Rolle spielt. Von entscheidenderer Bedeutung ist demgegenüber die dem Hohlglasartikel in den einzelnen Herstellungsstationen beginnend mit der Vorform und endend auf der Absetzplatte entzogene Wärme.

Entsprechend den Merkmalen des Anspruchs 3 wird ein alle Blas- und Kühlvorgänge erfassendes, den Prozess der Herstellung von Hohlglasartikeln hinsichtlich der Regelung und Konditionierung von Blas- und Kühlluftströmen anhand von Sollwerten betreffend Wärmeverluste, Temperaturen, Volumenströmen und Drücken abschnittsweise beschreibendes mathematisches Modell vorgeschlagen, welches die Grundlage für eine zentrale Reglung bildet und der Darstellung stabiler Betriebsparameter beginnend mit der Vorform und endend auf der Absetzplatte dient. Die abschnittsweise erfassten Wärmeverluste lassen Rückschlüsse auf die momentane Temperatur des zu formenden Artikels zu.

Es ist ferner die Aufgabe der Erfindung, eine Vorrichtung zur Durchführung des Verfahrens entsprechend den Merkmalen der Ansprüche 1 bis 3 zu entwerfen, welches eine gegenüber dem Stand der Technik differenziertere Berücksichtigung des Zustands des zu formenden Hohlglasartikels ermöglicht. Gelöst ist diese Aufgabe bei einer solchen Vorrichtung durch die Merkmale des Kennzeichnungsteils des Anspruchs 4.

Erfindungswesentlich ist hiernach eine Unterteilung der Kühlluftführung in einzelne Abschnitte, die jeweils mit Messeinrichtungen zur Erfassung eines Volumenstromes sowie zur Erfassung eingangs- und ausgangsseitiger Temperaturen, einer Regeleinrichtung sowie mit Mitteln zur Variierung des Volumenstromes als Stellgröße ausgerüstet sind. Das Temperaturprofil der zu formenden Artikels ist auf diesem Wege entlang der Abschnitte nachvollziehbar.

Entsprechend den Merkmalen des Anspruchs 5 umfasst jede Blas- und Kühlluftführung eine Messeinrichtung zur Erfassung eines Volumenstromes, Messeinrichtungen zur Erfassung eingangs- und ausgangsseitiger Temperaturen, eine Messeinrichtung zur Erfassung des Druckes, eine Regeleinrichtung und Mittel zur Variierung des Volumenstromes sowie des Druckes der Blas- und Kühlluft. Auf diese Weise werden alle, den Verformungsvorgang beschreibenden Parameter erfasst und können in einer Regelung umgesetzt werden.

Sämtliche Abschnitte einer Blas- und/oder Kühlluftführung, insbesondere deren Regeleinrichtungen stehen entsprechend den Merkmalen des Anspruchs 6 mit einer übergeordneten Maschinensteuerung in Verbindung, die der Koordinierung der den einzelnen Abschnitten jeweils zugeordneten Regelungen dient.

Entsprechend den Merkmalen des Anspruchs 7 ist in jedem Blaskopf ein Ventil vorgesehen, welches während der genannten ersten Phase geschlossen ist, einen Druckaufbau innerhalb des zu formenden Artikels ermöglichend, und welches während der genannten zweiten Phase geöffnet ist, um eine Kühlwirkung zu entwickeln. Das Ventil wird mittels der dem Abschnitt zugeordneten Regeleinrichtung betätigt, sobald ein Ende eines Formgebungsvorgangs signalisiert wird.

Die Merkmale der Ansprüche 8 und 9 sind auf einen, der Einführung von Kühlluft bestimmten Rohrabschnitt, ein Blasrohr gerichtet, der in den Hohlglasartikel hineinragt und der axial verschiebbar an dem Blaskopf befestigt sein kann. Dieser ermöglicht in der Kühlphase eine effektive Innenkühlung des Hohlglasartikels, insbesondere dessen unterer, einem Boden benachbarter Bereiche.

Die Merkmale der Ansprüche 10 und 11 sind auf Mittel gerichtet, die als Stellgrößen zur Variierung eines Volumenstromes sowie des Druckes des Bias- und Kühlluftstromes fungieren.

Man erkennt anhand der vorstehenden Ausführungen, dass mit dem erfindungsgemäßen Verfahren bzw. der vorgestellten Vorrichtung manuelle Eingriffe in den Betrieb einer Glasformmaschine minimiert werden können.

Eine zur Durchführung des erfindungsgemäßen Verfahrens bestimmte Vorrichtung wird im Folgenden unter Bezugnahme auf die beiliegenden, jeweils Abschnitte der Blas- und Kühlluftführung darstellenden Zeichnungen näher erläutert werden.

Es zeigen:
- Fig. 1: ein Schaltschema der Kühlluftführung zum Vorblasen in der Vorform;
- Fig. 2: ein Schaltschema der Kühlluftführung zur Stempelkühlung in der Vorform ;
- Fig. 3: ein Schaltschema der Kühlluftführung zur Formenkühlung in der Vorform;
- Fig. 4: ein Schaltschema der Kühlluftführung zur Formenkühlung in der Fertigform;
- Fig. 5: ein Schaltschema der Kühlluftführung zur Mündungskühlung der Fertigform;
- Fig. 6: ein Schaltschema der Kühlluftführung zur Bodenkühlung der Fertigform;
- Fig. 7: ein Schaltschema der Kühlluftführung zur Vakuumbeaufschlagung der Fertigform,
- Fig. 8: ein Schaltschema der Kühlluftführung zur Absetzplattenkühlung,

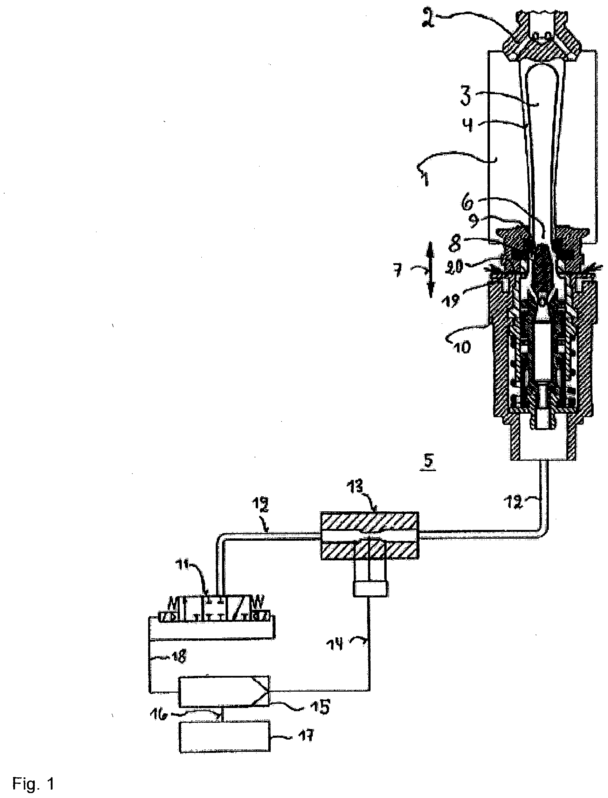

Mit 1 ist in Fig. 1 die entlang einer Axialebene geteilt ausgebildete, aus zwei Formhälften bestehende Vorform einer I.-S. Glasformmaschine bezeichnet, die sich in der geschlossenen Stellung befindet und oberseitig durch einen Vorboden 2 geschlossen ist. Innerhalb des Formraumes 3 befindet sich nach abgeschlossenem Formgebungsprozess das Külbel 4, dessen, der Unterseite 5 zugekehrter Mündungsöffnung 6 ein in Längsrichtung 7 verschiebbarer Pegel 8 gegenübersteht.

Fig. 1 zeigt den Pegel 8 in einer, einen ringförmigen Strömungsquerschnitt 9 im Bereich der Mündungsöffnung 6 frei gebenden Stellung, über welchen Blasluft ausgehend von einem Pegelzylinder-Oberteil 10 in den Formraum 3 des Külbels 4 einführbar ist.

Fig. 1 zeigt den Vorgang des Vorblasens, der lediglich bei einer Verfahrensführung nach Art des an sich bekannten Blas-Blas-Verfahrens benutzt wird.

Blasluft wird dem Pegelzylinder-Oberteil 10 ausgehend von einem Proportionalventil 11 über eine Leitung 12 zugeführt, in deren Verlauf eine Messeinrichtung 13 angeordnet ist, welche der Erfassung eines den Volumenstrom und eines dessen Temperatur beschreibenden Messwertes dient. Das Proportionalventil 11 steht in zeichnerisch nicht dargestellter Weise mit einer Druckluftquelle in Verbindung. Die Mess-einrichtung 13 kann hinsichtlich ihres Funktionsprinzips von nahezu beliebiger Art sein, soweit dieses zur Generierung eines elektrischen, den Volumenstrom sowie dessen Temperatur beschreibenden Messwertes geeignet ist.

Die Messeinrichtung 13 steht über eine Leitung 14 - es kann sich auch um eine Leitungsgruppe handeln, mit einer Regeleinrichtung 15 in Verbindung, die ihrerseits über eine Leitung 16 mit einer übergeordneten Maschinensteuerung 17 sowie über weitere Leitungen 18 mit dem Proportionalventil 11 in Verbindung steht.

Mit 19 ist ein im Mündungsbereich der Vorform 1 befindliches Ventil bezeichnet, dessen Funktion im Folgenden noch erläutert werden wird. Mit 20 ist ein Messfühler bezeichnet, mit welchem an dieser Stelle die Temperatur der über das Ventil in dessen Offenstellung abgeführten Blasluft erfassbar ist.

Das beispielsweise als Magnetventil ausgebildete und mittels der Maschinensteuerung 17 taktweise gesteuerte Ventil 19 ist während einer ersten Phase, die der Formgebung des Külbels 4 dient, geschlossen und wird erst geöffnet, nachdem die Formgebung beendet ist. Es schließt sich als zweite Phase eine Kühlphase an, während welcher Kühlluft über die Leitung 12, den Strömungsquerschnitt 9, den Formraum 3 und das Ventil 19 strömt. Das Ende des Blasvorgangs wird in einer im Folgenden noch zu beschreibenden Weise erkannt, wobei anhand der eingangs- und ausgangsseitigen Messung der Temperatur der Kühlluft der Wärmeentzug des Külbels 4 ermittelt und zur Regelung in einer im Folgenden zu beschreibenden Weise umgesetzt wird.

Bei der in Fig. 1 gezeigten Luftführung handelt es sich um die für die Formgebung nach Art eines Blas-Blas-Verfahrens in der Vorform 1 im Rahmen eines Vorblasens benötigte Luft.

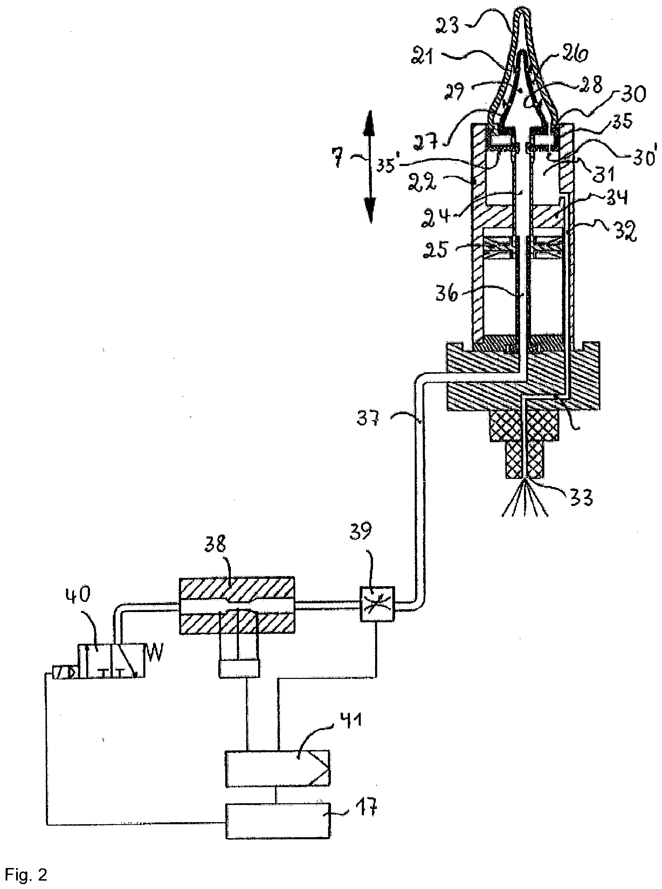

Fig. 2 zeigt eine zur Stempelkühlung auf der Vorformseite bestimmte Luftführung, bei welcher auf die zeichnerische Darstellung der Mündungsform verzichtet worden ist.

Bei diesem, beim Press-Blas-Verfahren zur Formgebung des Külbels benutzten Verfahren erfolgt dessen Ausformung durch einen, über eine Mündungsform einführten Stempel 21.

Der Stempel 21 ist in einem Zylinder 22 längsverschiebbar geführt und besteht aus einem hohl ausgebildeten, ein Formprofil bildenden Formteil 23, welches über ein sich innerhalb des Zylinders 22 axial erstreckendes Rohrelement 24 mit einem Kolben 25 in fester Verbindung steht. Innerhalb des Formteils 23, und zwar unter Belassung eines Zwischenraumes 26 erstreckt sich ein hohl ausgebildeter Verteiler 27, dessen Wandungen mit Ausnehmungen 28 versehen sind und dessen Innenraum 29 unmittelbar mit dem Rohrelement 24 in durchgängiger Verbindung steht. Der Zwischenraum 29 steht seinerseits über eine Öffnung 30, einen, das Rohrelement 24 umgebenden Ringraum 31 und eine teilweise innerhalb der Wandung des Zylinders 22 verlaufende Leitung 32 mit einer Austrittsöffnung 33 in Verbindung.

Der Ringraum 31 erstreckt sich innerhalb des Zylinders 22 und wird axial begrenzt durch eine fest angeordnete Zwischenwandung 34 des Zylinders 22 sowie zwei, zur formschlüssigen Verbindung des Stempels 21 mit dem Rohrelement 24 bestimmte Halbschalen 35, 35, auch "Splitringe" genannt, welche einen Hohlraum umschließen, der über die genannte Öffnung '30 mit dem Zwischenraum 26 und über wenigstens eine Öffnung 30' mit dem Ringraum 31 in durchgängiger Verbindung steht.

Mit 36 ist ein innerhalb des Zylinders 22 fest angeordnetes, sich umfangsseitig dichtend in das Rohrelement 24 hinein erstreckendes weiteres Rohrelement bezeichnet, welches über eine Leitung 37, in deren Verlauf eine Messeinrichtung 38 und eine elektrisch vorgesteuerte Drossel 39 angeordnet sind, mit einem Ventil 40 in Verbindung steht, welches an eine zeichnerisch nicht dargestellte Druckquelle angeschlossen ist.

Eine Regeleinrichtung 41 steht sowohl mit der Maschinensteuerung 17 als auch der zur Erfassung eines Volumenstromes sowie dessen Temperatur eingerichteten Messeinrichtung 38 und der Drossel 39 in Verbindung.

In der Austrittsöffnung 33 befindet sich ein zur Erfassung der Temperatur des an dieser Stelle austretenden Luftstromes bestimmter Messfühler.

Die Kühlluftführung gemäß Fig. 2 dient der Kühlung des Stempels 21 der in Fig. 1 gezeigten Vorform 1, wobei anhand der eingangs- und ausgangsseitig gewonnenen Messwerte der Temperaturen der Kühlluft ein Wärmeentzug erfasst und in einer im Folgenden noch zu beschreibenden Regelung umgesetzt wird.

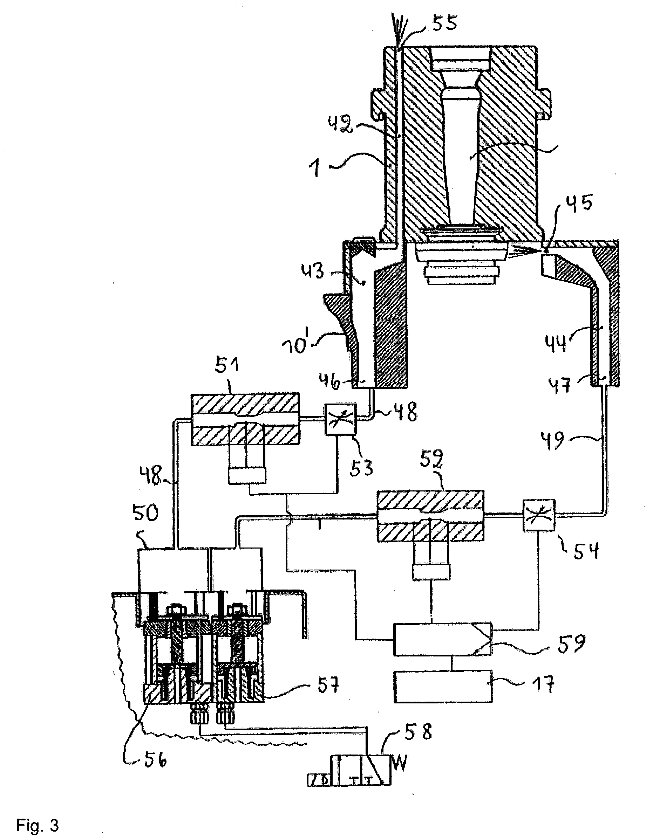

Fig. 3 zeigt eine weitere, der Formkühlung und der Mündungskühlung der Vorform 1 zugeordnete Luftführung.

Zu diesem Zweck ist die Formwandung der Vorform 1 mit wenigstens einer, vorzugsweise einer Gruppe von sich achsparallel zu der angenähert rotationssymmetrischen Vorform 1 erstreckenden Leitungen 42 durchzogen, die in Leitungen 43 des Kühlfuß 10' fortgeführt sind. Der Kühlfuß 10' dient als Anschlussteil und Übergabestelle für die Mündungs- und Formenkühlluft.

Innerhalb des Kühlfuß 10' ist eine weitere Leitung 44 - es kann sich auch um eine Gruppe von Leitungen 44 handeln - angeordnet, die eine Austrittsöffnung 45 in unmittelbarer Nähe des Mündungsbereichs der Vorform aufweist bzw. aufweisen, so dass die über diese Öffnung austretende Kühlluft eine Kühlwirkung auf den Mündungsbereich ausübt.

Das, der Vorform abgekehrte Ende 46 der Leitung 43 sowie das der Vorform 1 abgekehrte Ende 47 der Leitung 44 stehen über jeweilige Leitungen 48, 49 mit einer Ventilbaugruppe 50 in Verbindung, wobei im Verlauf dieser Leitungen 48, 49 jeweils eine Messeinrichtung 51, 52 sowie eine vorgesteuerte Drossel 53, 54 angeordnet sind.

Beide Messeinrichtungen 51, 52 sind zur Erfassung von Messwerten betreffend den Volumenstrom sowie dessen Temperatur eingerichtet, wobei diese Messwerte als elektrisch umsetzbare Messwerte vorliegen. Diese Temperaturen stellen somit die Eingangstemperaturen der jeweiligen Kühlluftströme dar. In der Austrittsöffnung 45 der Leitung 44 und gleichermaßen in der Austrittsöffnung 55 der Leitung 42 befinden sich jeweils Messfühler; über welche die Temperaturen der an diesen Stellen austretenden Kühlluft erfasst werden kann.

Die Ventilbaugruppe 50 besteht aus zwei Ventilen 56, 57, die jeweils den Leitungen 48, 49 vorgeordnet sind und mit einer zeichnerisch nicht dargestellten Druckluftquelle in Verbindung stehen. Es handelt sich um pneumatisch vorgesteuerte Ventile, wobei mit 58 das diesen zugeordnete Vorsteuerventil bezeichnet ist.

Die Messeinrichtungen 51, 52 stehen mit einer Regeleinrichtung 59 in Verbindung. Gleiches gilt für die als elektrisch vorgesteuerte Drosseln ausgebildeten Drosseln 53, 54. Die Regeleinrichtung 59 ihrerseits steht mit der übergeordneten Maschinensteuerung 17 in Verbindung.

Die Kühlluftführung gemäß Fig. 3 dient der Kühlung der Vorform 1 sowie deren Mündungsbereichs, wobei der anhand der eingangs- und ausgangsseitig gewonnenen Messwerte der Temperaturen der Kühlluft ein Wärmeentzug erfasst und in einer im Folgenden noch zu beschreibenden Regelung umgesetzt wird.

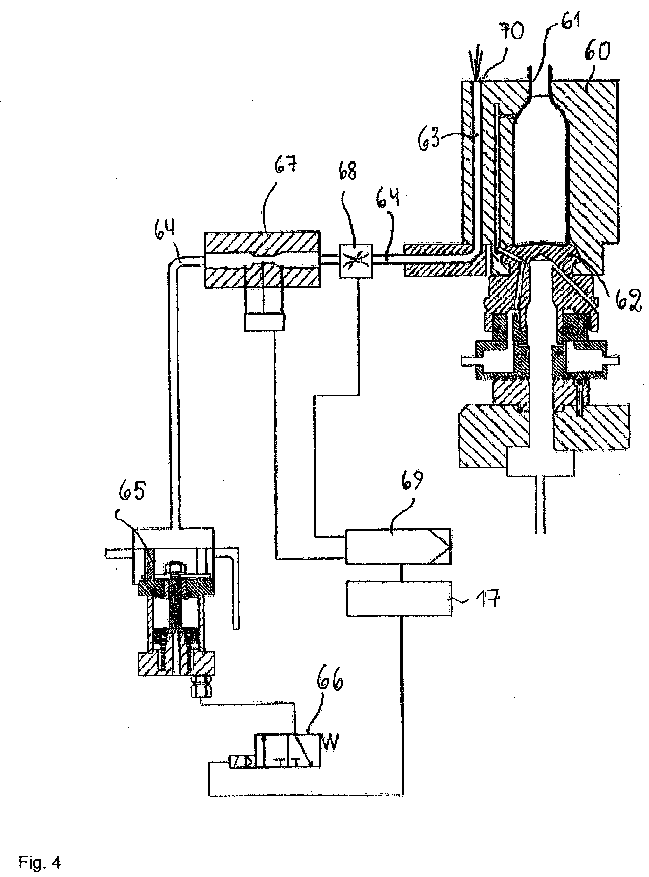

In Fig. 4 ist mit 60 eine Fertigform bezeichnet, in der sich ein abschließend geformter Hohlglasartikel 61 befindet. Die Fertigform 60 ist entlang einer vertikalen, deren Achse enthaltenden Teilungsebene in zwei Formhälften unterteilt, die unterseitig durch einen Boden 62 geschlossen werden. Innerhalb der Formhälften erstreckt sich eine Leitung 63, die außerhalb der Fertigform in einer Leitung 64 fortgeführt ist und mit einem Ventil 65 in Verbindung steht. Dieses steht mit einer zeichnerisch nicht dargestellten Druckluftquelle in Verbindung und ist über ein Vorsteuerventil 66 ansteuerbar.

Im Verlauf der Leitung 64 befinden sich eine, zur Erfassung eines Volumenstromes sowie dessen Temperatur erfassende Messeinrichtung 67 und eine elektrisch vorgesteuerte Drossel 68. Die Messeinrichtung 67 und die Drossel 68 stehen mit einer Regeleinrichtung 69 in Verbindung, die ihrerseits wiederum an die Maschinensteuerung 17 angeschlossen ist. Über die Maschinensteuerung 17 erfolgt die Betätigung des Vorsteuerventils 66.

In einer Austrittsöffnung 70 der Leitung 63 innerhalb der Fertigformwandung ist ein Messfühler angeordnet, über welchen die Temperatur der an dieser Stelle austretenden Luft erfasst wird.

Die Kühlluftführung gemäß Fig. 4 dient der Kühlung der Fertigform 60, wobei der anhand der eingangs- und ausgangsseitig gewonnenen Messwerte der Temperaturen der Kühlluft ein Wärmeentzug erfasst und in einer im Folgenden noch zu beschreibenden Regelung umgesetzt wird.

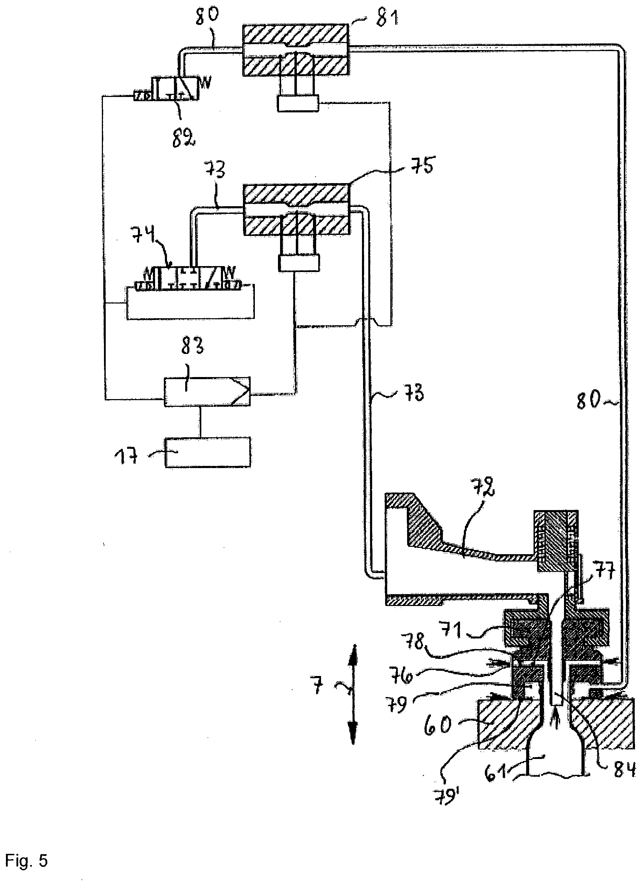

Fig. 5 zeigt den Blaskopf 71 der Fertigform 60, der über einen Blaskopfhalter 72 mit einer Leitung 73 in Verbindung steht, die an einem Proportionalventil 74 angeschlossen ist. Das Proportionalventil 74 steht mit einer zeichnerisch nicht dargestellten Druckluftquelle in Verbindung. Im Verlauf der Leitung 73 befindet sich eine Messeinrichtung 75, die zur Erfassung der des Volumenstroms sowie der Temperatur der in der Leitung 73 strömenden Luft eingerichtet ist. Der Blaskopf 71 ist mit einer Austrittsöffnung 76 versehen, die mit einem Messfühler 77 zur Erfassung der Temperatur der an dieser Stelle ausströmenden Luft versehen ist. Mit 78 ist ein Ventil angedeutet, welches zum Öffnen oder Freigeben der Austrittsöffnung 76 bestimmt und angeordnet ist.

Der Blaskopf 71 ist mit einem, die Mündung des Hohlglasartikels unmittelbar umgebenden Ringraum 79 versehen, an den eine Leitung 80 angeschlossen ist, in deren Verlauf sich eine zur Erfassung des Volumenstromes sowie der Temperatur der in der Leitung 80 strömenden Luft eingerichtete Messeinrichtung 81 befindet und die mit einem Ventil 82 in Verbindung steht, das in zeichnerisch nicht dargestellter Weise mit einer Druckluftquelle in Verbindung steht.

Beide Messeinrichtungen 75, 81, das Proportionalventil 74, und das Ventil 82 stehen mit einer Regeleinrichtung 83 in Verbindung, die ihrerseits an die Maschinensteuerung 17 angeschlossen ist.

Mit 79' ist eine dem Ringraum 79 zugeordnete Austrittsöffnung bezeichnet, in der ein Messfühler zur Erfassung der Temperatur der an dieser Stelle ausströmenden Luft angeordnet ist. Diese Luft ist die Mündungskühlungsluft.

Das Ventil 78 ist während einer ersten Phase, die der Formgebung des Hohlglasartikels 61 in der Fertigform 60 ausgehend von dem Külbel 4 dient, geschlossen und wird erst geöffnet, nachdem die Formgebung beendet ist. Es schließt sich als zweite Phase eine Kühlphase an, während welcher Kühlluft über die Leitung 73, den Blaskopfhalter 72, einen Rohrabschnitt 84 bzw. ein Blasrohr und das Ventil 78 strömt. Das Ende des Blasvorgangs wird in einer im Folgenden noch zu beschreibenden Weise erkannt, wobei anhand der eingangs- und ausgangsseitigen Messung der Temperatur der Kühlluft der Wärmeentzug des Hohlglasartikels 61 ermittelt und zur Regelung in einer im Folgenden zu beschreibenden Weise umgesetzt wird.

Besonders vorteilhaft kann der Rohrabschnitt 84 bzw. das Blasrohr vertikal in den Hohlglasartikel hinein ausfahrbar angeordnet sein, so dass sich dessen Mündungsöffnung im unteren Bereich des Hohlglasartikels befindet und eine besonders intensive Kühlwirkung in dessen unterem Bereich entwickelt wird.

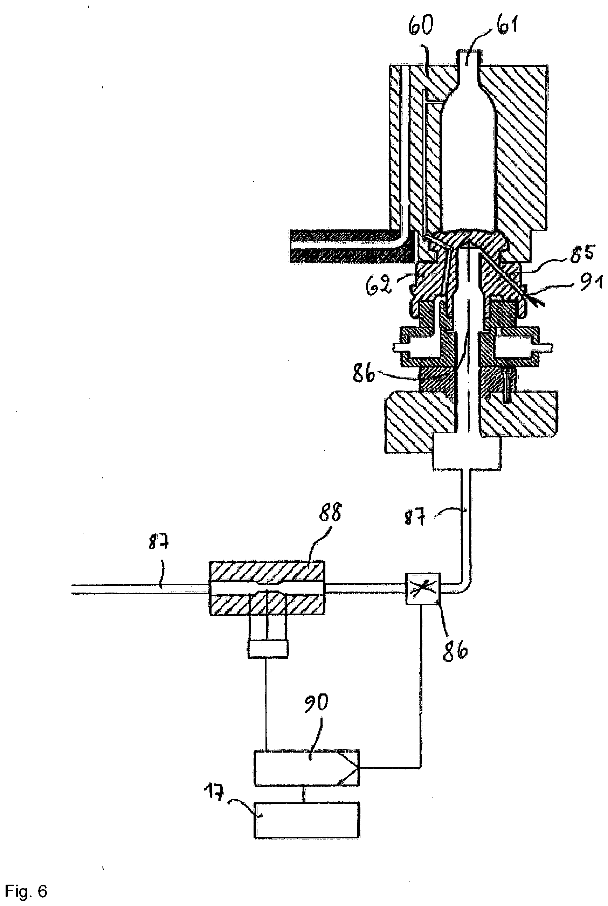

Fig. 6 zeigt eine zur Kühlung des Bodens 62 der Fertigform 60 bestimmte Luftführung, Zu diesem Zweck ist der Boden 62 mit einer diesen durchziehenden Leitung 85 versehen, welche über eine achsparallele Bohrung 86 an eine externe Leitung 87 angeschlossen ist, in deren Verlauf eine zur Erfassung des Volumenstromes sowie der Temperatur der in der Leitung 87 strömenden Luft eingerichtete Messeinrichtung 88 angeordnet ist. Das der Bohrung 86 abgekehrte Ende der Leitung 87 steht wiederum unter Zwischenanordnung eines zeichnerisch nicht dargestellten Ventils mit einer Druckluftquelle in Verbindung. Anstelle der einen Leitung 87 kann auch ein den Boden 62 gleichförmig durchsetzendes Netzwerk von Leitungen vorgesehen sein.

Mit 89 ist eine ebenfalls im Verlauf der Leitung 87 angeordnete, mittels einer Regeleinrichtung 90 elektrisch vorgesteuerte Drossel bezeichnet. Die Regeleinrichtung 90 steht ferner mit der Messeinrichtung 88 und der Maschinensteuerung 17 in Verbindung.

Mit 91 ist eine Austrittsöffnung im Boden 62 bezeichnet, die mit einem Messfühler zur Erfassung der Temperatur der an dieser Stelle ausströmenden Luft ausgerüstet ist.

Die Kühlluftführung gemäß Fig. 6 dient der Kühlung des Bodens der Fertigform 60, wobei anhand der eingangs- und ausgangsseitig gewonnenen Messwerte der Temperaturen der Kühlluft ein Wärmeentzug erfasst und in einer im Folgenden noch zu beschreibenden Regelung umgesetzt wird.

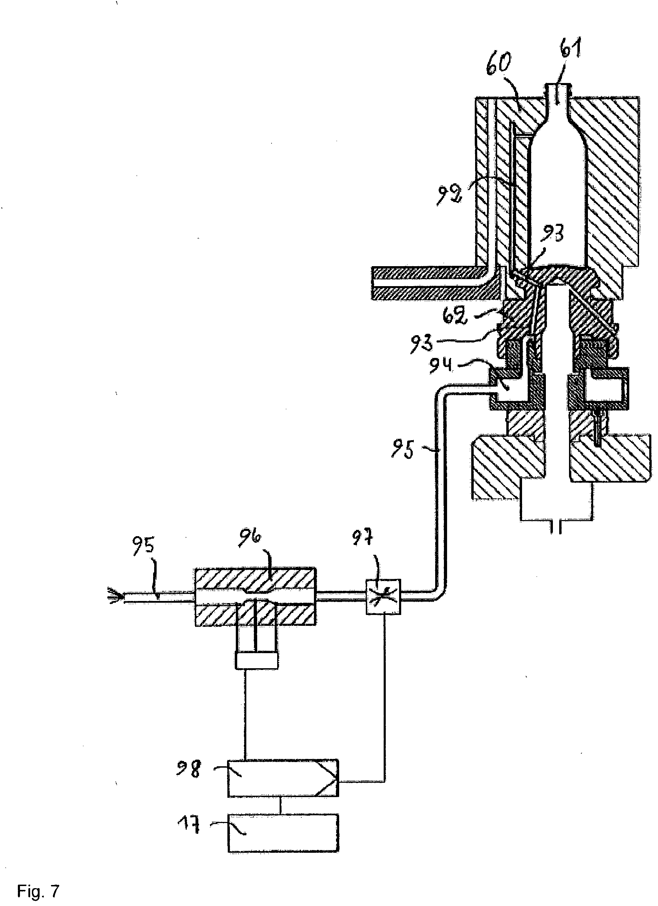

In Fig. 7 ist eine zusätzliche Art einer Kühlluftführung dargestellt, welche die Fertigform 60 betrifft. Zu diesem Zweck wird eine Leitung 92 - es kann sich auch um ein Leitungsnetzwerk handeln - innerhalb der Formwandungen vorgesehen, welches in zeichnerisch nicht dargestellter Weise mit der Umgebungsatmosphäre in Verbindung steht. Diese Leitung 92 ist über Zwischenabschnitte 93 durch den Boden 62 geführt und mündet in eine sich koaxial zu der Achse des Hohlglasartikels 61 erstreckende ringartige Vakuumkammer 94 ein, die über eine Leitung 95, in deren Verlauf eine Messeinrichtung 96 und eine elektrisch vorgesteuerte Drossel 97 angeordnet sind, mit einer zeichnerisch nicht dargestellten Vakuumquelle in Verbindung steht. Die Messeinrichtung 96 ist zur Erfassung eines die Leitung 95 durchziehenden Volumenstromes und dessen Temperatur eingerichtet und steht gleichermaßen wie die Drossel 97 mit einer Regeleinrichtung 98 in Verbindung, die ihrerseits an die Maschinensteuerung 17 angeschlossen ist.

Zeichnerisch nicht dargestellt ist ein Messfühler, der zur Erfassung der Temperatur der unter dem Einfluss des Vakuums in die Leitung 92 eintretenden Umgebungsluft eingerichtet ist. Die Temperatur der austretenden Luft in der Leitung 95 wird über die Messeinrichtung 95 erfasst.

Die Kühlluftführung gemäß Fig. 7 dient der Kühlung der Formwandungen der Fertigform 60, wobei anhand der eingangs- und ausgangsseitig gewonnenen Messwerte der Temperaturen der Kühlluft ein Wärmeentzug erfasst und in einer im Folgenden noch zu beschreibenden Regelung umgesetzt wird.

Eine solche, in Fig. 7 gezeigte Luftführung kann auch zusätzlich zu der in Fig. 4 vorgestellten Luftführung vorgesehen sein. Diese Luftführung kann sowohl zur Formgebung als auch zur Kühlung benutzt werden, d. h. parallel zu einer Fertigformblasluft, einer Fertigform-Mündungskühlluft, zur Fertigbodenkühlung usw. verlaufen und kann immer aktiv sein.

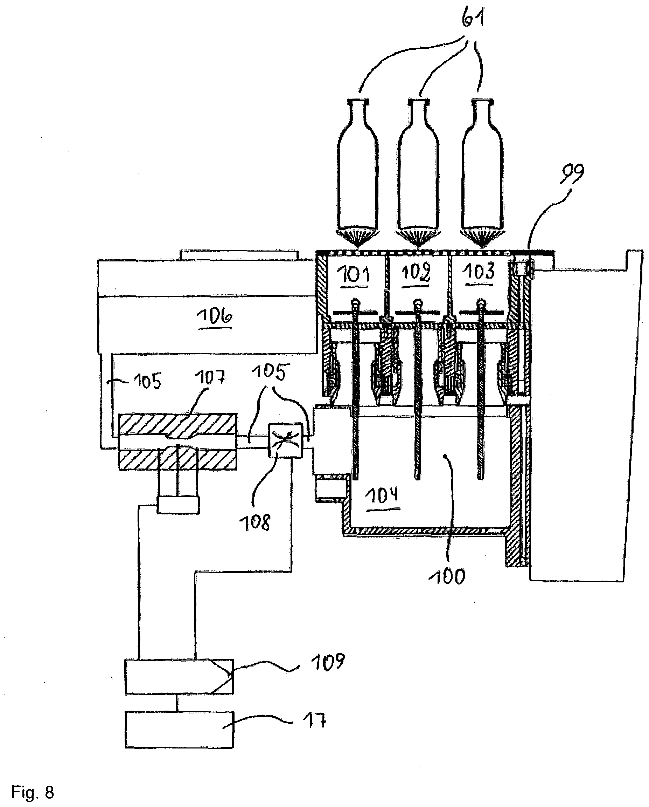

Fig. 8 zeigt eine zur Kühlung einer Absetzplatte 99 bestimmte Luftführung. Hierbei ist mit 100 eine Unterkonstruktion der Absetzplatte 99 bezeichnet, welche zur Verteilung eines Kühlluftstromes auf drei sich unmittelbar unterhalb der Absetzplatte 99 eingerichtete Kammern 101, 102, 103 dient, und zwar ausgehend von einer Eingangskammer 104. Anstelle von drei können jedoch nach Maßgabe der in der Station zu verarbeitenden Glasposten auch mehr oder weniger als drei solcher Kammern vorgesehen sein. Zwischen der Eingangskammer 104 und den einzelnen Kammern 101, 102 und 103 sind Ventile angeordnet, die eine unterschiedliche Beaufschlagung der Kammern mit Kühlluft ermöglichen, so dass auf der Absetzplatte 99 Felder mit dementsprechend unterschiedlicher Kühlwirkung eingerichtet werden können.

Eine Kühlwirkung soll in jedem Fall auf Hohlglasartikel 61 ausgeübt werden, die nach Maßgabe einer vorgebbaren Zeitspanne zunächst oberhalb der Absetzplatte 99 gehalten und anschließend auf diese gesetzt werden.

Die Eingangskammer 104 steht über eine Leitung 105 mit einer Kammer 106 in Verbindung, welche in zeichnerisch nicht dargestellter Weise an eine Druckquelle, z. B. ein Gebläse angeschlossen ist. Im Verlauf der Leitung 105 befinden sich eine zur Erfassung des diese durchströmenden Volumenstromes sowie dessen Temperatur bestimmte Messeinrichtung 107 sowie eine elektrisch vorgesteuerte Drossel 108, welche mit einer Regeleinrichtung 109 in Verbindung stehen, die ihrerseits an die Maschinensteuerung 17 angeschlossen ist.

Zeichnerisch nicht dargestellt ist zumindest eine Messeinrichtung, die zur Erfassung der Temperatur der von den Hohlglasartikeln 61 abströmenden erwärmten Luft eingerichtet ist.

Die Kühlluftführung gemäß Fig. 8 dient auch der Kühlung der über der Absetzplatte 99 befindlichen Böden der Hohlglasartikel sowie der Unterkonstruktion 100, wobei anhand der eingangsseitig über die Messeinrichtung 107 und ausgangsseitig über die zeichnerisch nicht dargestellte Messeinrichtung gewonnenen Messwerte der Temperaturen der von den Hohlglasartikeln abströmenden Kühlluft ein Wärmeentzug erfasst und in einer in einer im Folgenden noch zu beschreibenden Regelung umgesetzt wird.

Die vorstehend beschriebenen, bei einer I.S.- Glasformmaschine eingesetzten Luftführungen umfassen solche betreffend eine Blasführung, deren Zweck in der Formgebung und Kühlung zu sehen ist, so z. B. für die Vorform 1 (Fig. 1) und für die Fertigform (Fig. 4) und solche, die lediglich für die Kühlung bestimmt sind, so z. B. betreffend die Formen-, Mündungs- und Stempelkühlung der Vorform (Fig. 2 und 3), die Formenkühlung der Fertigform (Fig. 4 und 7), die Bodenkühlung der Fertigform (Fig. 6) und die Absetzplattenkühlung (Fig. 8).

Einer jeden der zur Formgebung und Kühlung bestimmten Luftführungen ist ein Regelkreis zugeordnet, dessen Eingangsgrößen durch den mittels der Messeinrichtungen 13, 38, 51 erfassten Volumenstrom der Blasluft einschließlich der durch diese erfassten Eingangstemperaturen und die an den Austrittsöffnungen 33, 45, 55 erfassten Austrittstemperaturen der Blasluft dargestellt sind. Einem jeden dieser Regelkreise ist als Stellglied ein Proportionalventil 11 oder eine vorgesteuerte Drossel 39, 53, 54 zugeordnet, über welche der Volumenstrom der Blas- und Kühlluft stufenlos verändert werden kann.

Einer jeden der zur Kühlung bestimmten Luftführungen ist ebenfalls ein Regelkreis zugeordnet, dessen Eingangsgrößen durch den jeweils mittels der Messeinrichtungen 67, 75, 88, 96, 107 erfassten Volumenstrom der Kühlluft einschließlich der durch diese erfassten Eingangstemperaturen und die an den Austrittsöffnungen 70, 76, 79', 91 erfassten Austrittstemperaturen der Kühlluft dargestellt sind. Einem jeden dieser Regelkreise sind als Stellglied eine vorgesteuerte Drossel 68, 86, , 97 108, bzw. ein Ventil 82 oder ein Proportionalventil 74 zugeordnet.

Die Erfassung der jeweils eingangs- und ausgangsseitigen Temperaturen dieser Luftführungen in Verbindung mit den in diesen geführten Volumenströmen wird zur Darstellung einer auf die jeweilige Luftführung bzw. den dieser zugeordneten Abschnitt bezogenen Wärmestrom benutzt, so dass der Wärmeverlust, die das zu formende Glas beginnend mit der Formung des Külbels 4 und endend auf der Absetzplatte 99 erfährt, differenziert, insbesondere abschnittsweise dargestellt ist. Dies wiederum wird dazu benutzt, die Temperatur des Produktes festzustellen und darauf hin zu prüfen, ob diese den gewünschten Randbedingungen des jeweiligen Abschnitts, z. B. der Vorform 1, der Fertigform 60 oder auch der Absetzplaite 99 entspricht oder ob Eingriffe in der Form einer Veränderung von Volumenströmen erforderlich sind.

Auf diesem Wege kann ein mathematisches Modell der Glasformgebung in der Form von Sollwerten, betreffend den Wärmeentzug und die zu tolerierenden Temperaturen in den einzelnen Verfahrensabschnitten bzw. deren Schnittstellen entwickelt werden, welches als Grundlage für eine den einzelnen Abschnitten angepasste Regelung letztendlich der Temperatur der zu formenden Artikel, deren Verformungsverhalten und schließlich deren mechanischer Stabilität nutzbar ist. Auf diese Weise ist ein Beitrag zur Darstellung einer reproduzierbaren Produktqualität geleistet.

Die Maschinensteuerung 17 dient der Koordinierung dieser einzelnen Regelkreise, so dass insoweit eine einheitliche Regelung für alle Blas- und Kühlluftführungen gegeben ist. Die bloße Verteilung der einzelnen Funktionen einer solchen Regelung auf die genannten Regeleinrichtungen 15, 41, 59, 69, 83, 90, 98, 109 und die Maschinensteuerung 17 ist nur beispielhaft zu verstehen und auch abweichend von der vorstehenden Beschreibung darstellbar.

Als Stellgrößen, soweit die Funktion des Kühlens betroffen ist, fungieren die Drosseln 39, 53, 68, 86, 97, 108, gegebenenfalls in Verbindung mit den lediglich zur Darstellung einer Öffnung oder Schließung der jeweiligen Leitung eingerichteten Ventilen 40, 56, 5765, 82. Diese ermöglichen eine Variierung des Volumenstromes der Kühlluft in den jeweiligen Abschnitten.

Als Stellgrößen, soweit die Funktion des Kühlens im Anschluss an eine Formgebung betroffen ist, fungieren die Proportionalventile 11, 74, die auch zur Darstellung einer Öffnung oder Schließung der jeweiligen Leitung eingerichtet sind.

Das Pegelzylinder-Oberteil 10 sowie der Kühlfuss 10' der Vorform 1 und der Blaskopf 71 der Fertigform 60 sind mit zeichnerisch nicht dargestellten Drucksensoren ausgerüstet, über welche der Druckverlauf während der Formgebung erfasst und durch einen elektrisches Signal dargestellt ist, welches über die jeweilige Regeleinrichtung 15, 41, 83 der Maschinensteuerung 17 übertragen wird. Aus den Messwerten eines Volumenstromes, der über die jeweilige Messeinrichtung 13, 38, 75 und den über diese Drucksensoren erfassten Druckwerten ist im Wege der Integration die Blasarbeit ermittelbar und durch einen Wert darstellbar, welcher ein Erkennen des Endes des Blas- bzw. Formgebungsvorganges ermöglicht. Ist dieses Ende erreicht, schließt sich eine Kühlphase an, in der mit der einströmenden Luft lediglich noch eine Kühlfunktion ausgeübt wird, und zwar nach Maßgabe der am Ende des jeweiligen Abschnitts erwünschten Produkttemperatur. Dies bedeutet, dass anhand eines die Blasarbeit beschreibenden Sollwertes die Druckbeaufschlagung der Vorform und der Fertigform im Zeitverlauf nach einem standardisierten, auf ein gleichförmiges reproduzierbares Arbeitsergebnis hin ausgerichteten Musters erfolgt. Als Stellgröße hinsichtlich der Blasarbeit kann der Druck herangezogen werden, der über ein zeichnerisch nicht dargestelltes Druckregelventil variierbar ist. Der Druck ist darüberhinaus insbesondere beim Fertigblasen von Bedeutung, da hiervon die vertikale Glasverteilung beeinflusst wird sowie die Geschwindigkeit und die Gleichförmigkeit, nach denen eine Kühlung eintritt. Durch eine Regelung des Druckes der Blasluft in Verbindung mit deren Volumenstrom kann der Zeitablauf des Blasvorgangs, insbesondere eine Verformungsgeschwindigkeit beeinflusst werden.

Man erkennt anhand der vorstehenden Ausführungen, das mit dem erfindungsgemäßen Verfahren ein die Blas- und Kühlluft sämtlicher Abschnitte einer I.S.-Glasformmaschine hinsichtlich ihrer Kühl- und Formgebungsfunktion steuerndes System zur Verfügung gestellt ist, welches eine Darstellung reproduzierbarer Produktqualitäten ermöglicht. Dies wird erreicht auf der Grundlage eines Vergleichs des tatsächlichen Wärmeentzugs in den einzelnen Stationen einschließlich der tatsächlichen Blasarbeit in der Vorform- sowie der Fertigform mit entsprechenden Standardwerten, welches zur Anpassung von Maschineneinstellungen benutzt wird. Entgegen unterschiedlicher Kühlwirkungen beispielsweise bei Tag- oder Nachtbetrieb ist auf diesem Wege ein Beitrag zu reproduzierbaren Produktqualitäten gegeben.

**Bezugszeichenliste:**

| | | | | | |
|---|---|---|---|---|---|
| 1. | Vorform | 8. | Pegel | 14. | Leitung |
| 2. | Vorboden | 9. | Strömungsquerschnitt | 15. | Regeleinrichtung |
| 3. | Formraum | 10. | Pegelzylinder-Oberteil | 16. | Leitung |
| 4. | Külbel | 10'. | Kühlfuss | 17. | Maschinensteuerung |
| 5. | Unterseite | 11. | Proportionalventil | 18. | Leitungen |
| 6. | Mündungsöffnung | 12. | Leitung | 19. | Ventil |
| 7. | Längsrichtung | 13. | Messeinrichtung | 20. | Messfühler |
| 21. | Stempel | 51. | Messeinrichtung | 82. | Ventil |
| 22. | Zylinder | 52. | Messeinrichtung | 83. | Regeleinrichtung |
| 23. | Formteil | 53. | Drossel | 84. | Rohrabschnitt |
| 24. | Rohrelement | 54. | Drossel | 85. | Leitung |
| 25. | Kolben | 55. | Austrittsöffnung | 86. | Bohrung |
| 26. | Zwischenraum | 56. | Ventil | 87. | Leitung |
| 27. | Verteiler | 57. | Ventil | 88. | Messeinrichtung |
| 28. | Ausnehmung | 58. | Vorsteuerventil | 89. | Drossel |
| 29. | Innenraum | 59. | Regeleinrichtung | 90. | Regeleinrichtung |
| 30. | Öffnung | 60. | Fertigform | 91. | Austrittsöffnung |
| 30'. | Öffnung | 61. | Hohlglasartikel | 92. | Leitung |
| 31. | Ringraum | 62. | Boden | 93. | Zwischenabschnitt |
| 32. | Leitung | 63. | Leitung | 94. | Vakuumkammer |
| 33. | Austrittsöffnung | 64. | Leitung | 95. | Leitung |
| 34. | Zwischenwandung | 65. | Ventil | 96. | Messeinrichtung |
| 35. | Halbschale | 66. | Vorsteuerventil | 97. | Drossel |
| 35'. | Halbschale | 67. | Messeinrichtung | 98. | Regeleinrichtung |
| 36. | Rohrelement | 68. | Drossel | 99. | Absetzplatte |
| 37. | Leitung | 69. | Regeleinrichtung | 100. | Unterkonstruktion |
| 38. | Messeinrichtung | 70. | Austrittsöffnung | 101. | Kammer |
| 39. | Drossel | 71. | Blaskopf | 102. | Kammer |
| 40. | Ventil | 72. | Blaskopfhalter | 103. | Kammer |
| 41. | Regeleinrichtung | 73. | Leitung | 104. | Eingangskammer |
| 42. | Leitung | 74. | Proportionalventil | 105. | Leitung |
| 43. | Leitung | 75. | Messeinrichtung | 106. | Kammer |
| 44. | Leitung | 76. | Austrittsöffnung | 107. | Messeinrichtung |
| 45. | Austrittsöffnung | 77. | Messfühler | 108. | Drossel |
| 46. | Ende | 78. | Ventil | 109. | Regeleinrichtung |
| 47. | Ende | 79. | Ringraum | | |
| 48. | Leitung | 79'. | Austrittsöffnung | | |
| 49. | Leitung | 80. | Leitung | | |
| 50. | Ventilbaugruppe | 81. | Messeinrichtung | | |

## Patentansprüche

1. Verfahren zur Regelung der Blas- und/oder Kühluftströme einer I.S.-Glasformmaschine bestehend zumindest aus einer Luftführung für die Blas- und/oder Kühlluft einer Vorform (1) sowie einer Fertigform (60) und Luftführungen für die Kühlluft zumindest von Vorform (1) und Fertigform (60), wobei ausgehend von einer Druckluftquelle Luftströme nach Maßgabe ihres Verwendungszwecks über unterschiedliche Leitungen (12, 37, 48, 49, 64, 73, 80, 87, 105) zumindest der Vorform (1) und der Fertigform (60) zugeführt werden, **dadurch gekennzeichnet, dass** die Regelung eines jeden Kühlluftstromes auf der Grundlage eines den kühlenden Abschnitt der Glasformmaschine durchziehenden Volumenstromes der Kühlluft in Verbindung mit den eingangs- und ausgangsseitig bezüglich des Abschnitts erfassten Temperaturen der Kühlluft erfolgt, wobei der auf den Abschnitt bezogene Wärmeverlust erfasst und wobei nach Maßgabe eines Vergleichs dieses Verlustes mit Sollwerten der Volumenstrom variiert wird.

2. Verfahren nach Anspruch 1, **dadurch gekennzeichnet, dass** die Regelung eines Blas- und Kühlluftstromes zweistufig mit der Maßgabe erfolgt, dass in einer ersten, zur Formgebung benutzten Phase der Druckverlauf der Blasluft erfasst und zusammen mit der Erfassung des Volumenstromes zur Ermittlung eines die Blas- und/oder Saugarbeit beschreibenden Wertes umgesetzt wird, dass dieser Wert der Blas- und/oder Saugarbeit mit Sollwerten verglichen sowie zur Erkennung des Endes des Formgebungsvorgangs benutzt wird, dass in einer zweiten, sich an die erste Phase anschließenden Phase der Luftstrom lediglich als Kühlluftstrom benutzt wird, und dass nach Maßgabe des ermittelten Wertes der Blas-und/oder Saugarbeit der Druck der Blasluft und / oder deren Volumenstrom variiert werden.

3. Verfahren nach Anspruch 1 oder 2, **gekennzeichnet durch** ein die Blas-und/oder Saugarbeit der Vor- und Fertigform (1, 60) sowie die Wärmeverluste in den einzelnen Abschnitten der I.S.-Glasformmaschine beschreibendes mathematisches Modell, wobei die genannten Stellgrößen nach Maßgabe dieses Modells gesteuert werden.

4. Vorrichtung zur Durchführung des Verfahrens nach einem der vorangegangenen Ansprüche 1 bis 3, **gekennzeichnet durch** jeweils zumindest der Vorform (1) sowie der Fertigform (60) zugeordnete Blas- und / oder Kühlluftführungen, **dadurch gekennzeichnet, dass** jede Kühlluftführung aus dem zu kühlenden Abschnitt der I.S.-Glasformmaschine, einer Mess-einrichtung (13, 38, 67, 75, 88, 96, 107) zur Erfassung des den Abschnitt durchströmenden Kühlluftstromes sowie Messeinrichtungen zur Erfassung der eingangs- und ausgangsseitig bezüglich des Abschnitts bestehenden Temperaturen der Kühlluft, und einer Regeleinrichtung (15, 41, 59, 69, 83, 90, 98, 109) besteht, und dass als Stellgröße Mittel zur Variierung des Volumenstromes der Kühlluft vorgesehen sind.

5. Vorrichtung nach Anspruch 4, **dadurch gekennzeichnet, dass** jede Blas-und Kühlluftführung aus dem zu kühlenden Abschnitt der I.S.-Glasformmaschine, einer Messeinrichtung (13, 38, 67, 75, 88, 96, 107) zur Erfassung des den Abschnitt durchströmenden Kühlluftstromes, aus Messeinrichtungen zur Erfassung der eingangs- und ausgangsseitig bezüglich des Abschnitts bestehenden Temperaturen der Kühlluft, und einer Mess-einrichtung zur Erfassung des Drucks der Blasluft sowie einer Regeleinrichtung (15, 41, 59, 69, 83, 90, 98, 109) besteht und dass als Stellgrößen Mittel zur Variierung des Volumenstromes sowie des Druckes der Kühl- und Blasluft vorgesehen sind.

6. Vorrichtung nach Anspruch 4 oder 5, **dadurch gekennzeichnet, dass** sämtliche Regeleinrichtungen (15, 41, 59, 69, 83, 90, 98, 109) mit einer übergeordneten Maschinensteuerung (17) in Verbindung stehen.

7. Vorrichtung nach Anspruch 5 oder 6, **dadurch gekennzeichnet, dass** jede Blas- und Kühlluftführung mit einem Ventil (19) versehen ist, welches mit der jeweiligen Regeleinrichtung (15) oder der Maschinensteuerung (17) in Verbindung steht, welches während einer ersten, zur Formgebung bestimmten Phase geschlossen und welches während einer zweiten, zur Kühlung bestimmten Phase geöffnet ist.

8. Vorrichtung nach einem der Ansprüche 4 bis 7, **dadurch gekennzeichnet, dass** an einem Blaskopf (71) der Fertigform (60) ein zur Luftführung bestimmter, in den geformten Hohlglasartikel (61) axial einführbarer Rohrabschnitt (84) angeordnet ist.

9. Vorrichtung nach Anspruch 8, **dadurch gekennzeichnet, dass** der Rohrabschnitt (84) innerhalb des Hohlglasartikels (61) axial verschiebbar angeordnet ist.

10. Vorrichtung nach einem der Ansprüche 4 bis 9 **dadurch gekennzeichnet, dass** die Mittel zur Variierung des Volumenstromes der Kühlluft durch vorgesteuerte Drosseln (39, 53, 54, 68, 86, 97) dargestellt sind.

11. Vorrichtung nach einem der Ansprüche 5 bis 10, **dadurch gekennzeichnet, dass** die Mittel zur Variierung des Volumenstromes sowie des Druckes der Kühl- und Blasluft durch Proportiönalventile (11, 74) sowie Druckregelventile dargestellt sind.

## Claims

1. Method for regulating the blowing and/or cooling air streams of an I.S. glassware forming machine consisting at least of an air duct for the blowing and/or cooling air of a parison mould (1) and of a blow mould (60) and air ducts for the cooling air at least of the parison mould (1) and blow mould (60), wherein, starting from a compressed air source, air streams are supplied at least to the parison mould (1) and to the blow mould (60) in accordance with their intended use via different lines (12, 37, 48, 49, 64, 73, 80, 87, 105), **characterised in that** each cooling air stream is regulated on the basis of a volume flow of the cooling air - being drawn through the cooling section of the glassware forming machine - in conjunction with the temperatures of the cooling air measured on the inlet side and outlet side in relation to the section, wherein the heat loss in relation to the section is measured and wherein the volume flow is varied in accordance with a comparison of this loss with desired values.

2. Method as claimed in claim 1, **characterised in that** a blowing and cooling air stream is regulated in two stages under the proviso that in a first phase used for shaping purposes the pressure progression of the blowing air is measured and, together with the measuring of the volume flow, is implemented to determine a value describing the blowing and/or suction work, that this value of the blowing and/or suction work is compared with desired values and is used to identify the end of the shaping procedure, that, in a second phase following the first phase, the air steam is used merely as a cooling air stream, and that the pressure of the blowing air and/or the volume flow thereof are varied in accordance with the determined value of the blowing and/or suction work.

3. Method as claimed in claim 1 or 2, **characterised by** a mathematical model describing the blowing and/or suction work of the parison mould and blow mould (1, 60) and the heat losses in the individual sections of the I.S. glassware forming machine, wherein said control variables are controlled in accordance with this model.

4. Device for carrying out the method as claimed in any one of the preceding claims 1 to 3, **characterised by** blowing and/or cooling air ducts allocated in each case at least to the parison mould (1) and the blow mould (60), **characterised in that** each cooling air duct consists of the section of the I.S glassware forming machine to be cooled, of a measuring device (13, 38, 67, 75, 88, 96, 107) for measuring the cooling air stream flowing through the section, and measuring devices for measuring the temperatures of the cooling air present on the inlet side and outlet side in relation to the section, and of a regulating device (15, 41, 59, 69, 83, 90, 98, 109), and that means for varying the volume flow of the cooling air are provided as a control variable.

5. Device as claimed in claim 4, **characterised in that** each blowing and cooling air duct consists of the section of the I.S glassware forming machine to be cooled, of a measuring device (13, 38, 67, 75, 88, 96, 107) for measuring the cooling air stream flowing through the section, of measuring devices for measuring the temperatures of the cooling air present on the inlet side and outlet side in relation to the section, and of a measuring device for measuring the pressure of the blowing air and of a regulating device (15, 41, 59, 69, 83, 90, 98, 109), and that means for varying the volume flow and the pressure of the cooling and blowing air are provided as control variables.

6. Device as claimed in claim 4 or 5, **characterised in that** all of the regulating devices (15, 41, 59, 69, 83, 90, 98, 109) are connected to a superordinate machine controller (17).

7. Device as claimed in claim 5 or 6, **characterised in that** each blowing and cooling air duct is provided with a valve (19) which is connected to the respective regulating device (15) or the machine controller (17), which is closed during a first phase intended for shaping purposes and is opened during a second phase intended for cooling purposes.

8. Device as claimed in any one of claims 4 to 7, **characterised in that** a pipe section (84) intended for the passage of air and able to be introduced axially into the formed hollow glass article (61) is disposed on a blowing head (71) of the blow mould (60).

9. Device as claimed in claim 8, **characterised in that** the pipe section (84) is disposed in an axially displaceable manner inside the hollow glass article (61).

10. Device as claimed in any one of claims 4 to 9, **characterised in that** the means for varying the volume flow of the cooling air are constituted by pilot-controlled restrictors (39, 53, 54, 68, 86, 97).

11. Device as claimed in any one of claims 5 to 10, **characterised in that** the means for varying the volume flow and the pressure of the cooling and blowing air are constituted by proportional valves (11, 74) and pressure regulating valves.

## Revendications

1. Procédé de régulation des courants d'air soufflé et/ou d'air de refroidissement d'une machine de moulage de verre I.S. se composant au moins d'un guidage d'air pour l'air soufflé et/ou l'air de refroidissement d'une préforme (1) ainsi que d'une forme finie (60) et des guidages d'air pour l'air de refroidissement au moins de la préforme (1) et de la forme finie (60), dans lequel à partir d'une source d'air comprimé, des courants d'air sont amenés selon leur utilisation prévue par le biais de différentes conduites (12, 37, 48, 49, 64, 73, 80, 87, 105) au moins à la préforme (1) et à la forme finie (60), **caractérisé en ce que** la régulation de chaque courant d'air de refroidissement est effectuée sur la base d'un débit volumétrique traversant la section refroidissante de la machine de moulage de verre de l'air de refroidissement en liaison avec les températures détectées côté entrée et sortie par rapport à la section de l'air de refroidissement, dans lequel la perte de chaleur relative à la section est détectée et dans lequel selon une comparaison de cette perte avec des valeurs de consigne, le débit volumétrique est varié.

2. Procédé selon la revendication 1, **caractérisé en ce que** la régulation d'un courant d'air soufflé et d'air de refroidissement est effectuée en deux étapes à condition que dans une première phase utilisée pour le formage, l'allure de pression de l'air soufflé soit détectée et convertie conjointement avec la détection du débit volumétrique pour la détermination d'une valeur décrivant le travail de soufflage et/ou d'aspiration, que cette valeur du travail de soufflage et/ou d'aspiration soit comparée avec des valeurs de consigne et utilisée pour la reconnaissance de la fin du processus de formage, que dans une seconde phase suivant la première phase, le courant d'air soit juste utilisé comme courant d'air de refroidissement et que selon la valeur déterminée du travail de soufflage et/ou d'aspiration, la pression d'air soufflé et/ou son débit volumétrique soient variés.

3. Procédé selon la revendication 1 ou 2, **caractérisé par** un modèle mathématique décrivant le travail de soufflage et/ou d'aspiration de la préforme et de la forme finie (1, 60) ainsi que les pertes de chaleur dans les sections individuelles de la machine de moulage de verre I.S., dans lequel les grandeurs de réglage citées sont commandées selon ce modèle.

4. Dispositif de réalisation du procédé selon l'une des revendications précédentes 1 à 3, **caractérisé par** des guidages d'air de soufflage et/ou d'air d'aspiration associés respectivement au moins à la préforme (1) ainsi qu'à la forme finie (60), **caractérisé en ce que** chaque guidage d'air de refroidissement se compose de la section à refroidir de la machine de moulage de verre I.S., d'un dispositif de mesure (13, 38, 67, 75, 88, 96, 107) pour la détection du courant d'air de refroidissement traversant la section ainsi que des dispositifs de mesure pour la détection des températures régnantes côté entrée et sortie par rapport à la section de l'air de refroidissement, et d'un dispositif de régulation (15, 41, 59, 69, 83, 90, 98, 109), et que comme grandeur de réglage, des moyens sont prévus pour la variation du débit volumétrique de l'air de refroidissement.

5. Dispositif selon la revendication 4, **caractérisé en ce que** chaque guidage d'air soufflé et d'air de refroidissement se compose de la section à refroidir de la machine de moulage de verre I.S., d'un dispositif de mesure (13, 38, 67, 75, 88, 96, 107) pour la détection du courant d'air de refroidissement traversant la section, de dispositifs de mesure pour la détection des températures régnantes côté entrée et sortie par rapport à la section de l'air de refroidissement, et d'un dispositif de mesure pour la détection de la pression de l'air soufflé ainsi que d'un dispositif de régulation (15, 41, 59, 69, 83, 90, 98, 109) et que comme grandeurs de réglage, des moyens pour la variation du débit volumétrique ainsi que de la pression de l'air de refroidissement et de l'air soufflé sont prévus.

6. Dispositif selon la revendication 4 ou 5, **caractérisé en ce que** tous les dispositifs de régulation (15, 41, 59, 69, 83, 90, 98, 109) sont en liaison avec une commande de machine (17) supérieure.

7. Dispositif selon la revendication 5 ou 6, **caractérisé en ce que** chaque guidage d'air soufflé et d'air de refroidissement est pourvu d'une soupape (19) qui est en liaison avec le dispositif de régulation (15) respectif ou la commande de machine (17), qui est fermée pendant une première phase destinée au formage et qui est ouverte pendant une seconde phase destinée au refroidissement.

8. Dispositif selon l'une des revendications 4 à 7, **caractérisé en ce qu'**une section tubulaire (84) pouvant être introduite axialement dans l'article de verre creux (61) formé, destiné au guidage d'air, est agencée sur une tête de soufflage (71) de la forme finie (60).

9. Dispositif selon la revendication 8, **caractérisé en ce que** la section tubulaire (84) est agencée dans l'article de verre creux (61) de manière à pouvoir se déplacer axialement.

10. Dispositif selon l'une des revendications 4 à 9, **caractérisé en ce que** les moyens pour la variation du débit volumétrique de l'air de refroidissement sont représentés par des étranglements précommandés (39, 53, 54, 68, 86, 97).

11. Dispositif selon l'une des revendications 5 à 10, **caractérisé en ce que** les moyens pour la variation du débit volumétrique ainsi que de la pression de l'air de refroidissement et de l'air soufflé sont représentés par des soupapes proportionnelles (11, 74) ainsi que par des soupapes de régulation de pression.
